# EUROPÄISCHE PATENTANMELDUNG

(11) **EP 4 331 903 A1**
(43) Veröffentlichungstag der Anmeldung: **06.03.2024**
(21) Anmeldenummer: 23000105.9
(22) Anmeldetag: 27.07.2023
(51) Int. Cl.: B60L 53/16, B60L 53/18

(54) **LADEKABEL MIT SICHERHEITSLEITUNG**

(30) Priorität: 24.08.2022 DE 102022121395
(71) Anmelder: HARTING Automotive GmbH, 32339 Espelkamp (DE)
(72) Erfinder: Kipp, Tobias, 32339 Espelkamp (DE); Beimdieck, Carsten, 32339 Espelkamp (DE)

(57) **Zusammenfassung**

Die Erfindung betrifft ein Ladekabel (2) zum Laden eines Elektrofahrzeugs, das an einer Ladestation (3) angeschlossen ist und eine Steuerung (30) der Ladestation (3) mit einem Ladestecker (4) verbindet.

in dem Ladekabel (2) erstreckt sich von der Steuerung (30) eine Schutzleitung (PE) zu einem in dem Ladestecker (4) vorgesehenen Schutzkontakt (PE). In dem Ladekabel (2) erstreckt sich von der Steuerung (30) außerdem eine zweite Steuerleitung (PP) zu einem in dem Ladestecker (4) vorgesehenen zweiten Steuerkontakt (PP). Dabei ist die zweite Steuerleitung (PP) als Sicherheitsleitung (PP) zur Überwachung eines Betriebszustands des Ladekabels (2) eingerichtet und erstreckt sich hierfür von dem zweiten Steuerkontakt (PP) in dem Ladekabel (2) zu einer Messeinrichtung (301) der Steuerung (30) der Ladestation (3).

Die Erfindung betrifft außerdem ein Ladesystem (1) zum Laden eines Elektrofahrzeugs mit einer Ladestation (3) und einem Ladestecker (4) und einem zur Verbindung des Ladesteckers (4) mit der Ladestation (3) vorgesehenen vorstehenden Ladekabel (2).

## Beschreibung

Die Erfindung betrifft ein Ladekabel zum Laden eines Elektrofahrzeugs mit einer Sicherheitsleitung zur Überwachung des Kabelzustands und insbesondere zur Diebstahlerkennung. Die Erfindung betrifft dabei außerdem insbesondere ein Ladesystem mit einem derartigen Ladekabel, das an eine Ladestation angeschlossen ist, und an dessen Ende ein Ladestecker angeschlossen ist.

Da beim Laden von Elektrofahrzeugen große Leistungen von mehreren Kilowatt und entsprechend hohe Stromstärken verwendet werden, weisen Ladekabel elektrische Leitungen mit geeigneten entsprechend großen Querschnitten auf. Derartige Ladekabel umfassen somit große Mengen leitfähigen Metalls, insbesondere Kupfer, was einen beträchtlichen Wert darstellt. Es ist daher wünschenswert den Betriebszustand von Ladekabeln zu überwachen und dabei insbesondere Ladekabel vor Beschädigung und insbesondere vor Diebstahl zu schützen.

### Stand der Technik

Aus der DE 10 2020 206 067 A1 ist eine Ladevorrichtung für ein elektrisch antreibbares Kraftfahrzeug bekannt, die ein Ladekabel mit einer Anschlussvorrichtung zum Verbinden mit dem Kraftfahrzeug aufweist, die an einem ersten Ende des Ladekabels angeordnet ist. Die Ladevorrichtung weist eine Steuereinheit auf, die an einem zweiten Ende des Ladekabels mit diesem verbunden ist, und das Ladekabel weist eine Messleitung auf, die mit der Steuereinheit verbunden ist und sich zwischen der Steuereinheit und der Anschlussvorrichtung erstreckt. Die Steuereinheit ist dazu eingerichtet, einen elektrischen Widerstand der Messleitung zu bestimmen und abhängig von dem Widerstand ein mechanisches Durchtrennen der Messleitung und damit des Ladekabels zu detektieren. Die Messleitung weist dabei einen ersten elektrischen Leitungsteil auf, der sich durch das Ladekabel von einem ersten Steueranschluss der Steuereinheit zu der Anschlussvorrichtung und einem ersten Anschluss eines Widerstandsbauelements erstreckt. Die Messleitung weist außerdem einen zweiten elektrischen Leitungsteil auf, der mit einem zweiten Anschluss des Widerstandsbauelements verbunden ist und von der Anschlussvorrichtung durch das Ladekabel zu einem zweiten Steueranschluss der Steuereinheit zurückgeführt ist.

Die Messleitung ist insbesondere mit ihrem ersten und zweiten Leitungsteil, die sich beide parallel jeweils durch das vollständige Ladekabel erstrecken, nachteilhaft aufwendig und entsprechend kostspielig.

Das Deutsche Patent- und Markenamt hat in der Prioritätsanmeldung zur vorliegenden Anmeldung den folgenden Stand der Technik recherchiert: DE 10 2019 210 590 A1; US 2013/0320920 A1 und DE 10 2020 206 067 A1.

### Aufgabenstellung

Die Aufgabe der Erfindung besteht daher darin, ein einfaches und kostengünstiges Ladekabel zum Laden eines Elektrofahrzeugs bereitzustellen, das geeignet ist, seinen Kabelzustand zu überwachen und dabei insbesondere einen Diebstahl des Kabels zu erkennen.

Hierbei ist außerdem insbesondere Aufgabe der Erfindung ein Ladesystem mit einem derartigen Ladekabel bereitzustellen, das an eine Ladestation angeschlossen ist, und an dessen Ende ein Ladestecker angeschlossen ist.

Die Aufgabe wird durch die Merkmale des unabhängigen Anspruchs 1 gelöst.

Vorteilhafte Ausführungen der Erfindung sind in den Unteransprüchen und/oder der nachfolgenden Beschreibung angegeben.

Die Erfindung betrifft insbesondere ein Ladekabel zum Laden eines Elektrofahrzeugs, das an einer Ladestation angeschlossen ist und eine Steuerung der Ladestation mit einem Ladestecker verbindet. In dem Ladekabel erstreckt sich von der Steuerung eine Schutzleitung zu einem in dem Ladestecker vorgesehenen PE (Protective Earth) Schutzkontakt In dem Ladekabel erstreckt sich von der Steuerung außerdem eine zweite Steuerleitung zu einem in dem Ladestecker vorgesehenen zweiten Steuerkontakt.

Dabei ist die zweite Steuerleitung vorteilhaft als Sicherheitsleitung zur Überwachung eines Betriebszustands des Ladekabels eingerichtet und erstreckt sich hierfür von dem in dem Ladestecker vorgesehenen zweiten Steuerkontakt in dem Ladekabel zu einer Messeinrichtung der Steuerung der Ladestation. Bei dem zweiten Steuerkontakt, mit dem die Sicherheitsleitung verbunden ist, handelt es sich geeigneter Weise um einen PP (Proximity Pilot) Kontakt zur Ermittlung eines maximalen Ladestroms und zur Begrenzung des Ladestroms mittels Widerstandskodierung zum Schutz des verwendeten Ladekabels vor Überlastung.

Die zweite Steuerleitung des Ladekabels ist geeigneter Weise außerdem an einen in dem Ladestecker vorgesehenen Widerstand angeschlossen ist, der den PE Schutzkontakt und den zweiten Steuerkontakt in dem Ladestecker überbrückt. Bei dem Widerstand handelt es sich vorteilhaft um einen in dem Ladestecker zur

Überwachung der maximalen Stromstärke vorgesehenen Überwachungswiderstand, der es gestattet den maximalen Ladestrom zu ermitteln und den Ladestrom mittels Widerstandskodierung zum Schutz des verwendeten Ladekabels vor Überlastung zu begrenzen.

Die PE Schutzleitung erstreckt sich von dem in dem Ladestecker vorgesehenen vorstehenden Widerstand und dem PE Schutzkontakt in dem Ladekabel zu der Steuerung der Ladestation und ist wie die Sicherheitsleitung ebenfalls an die Messeinrichtung der Steuerung angeschlossen. Die Messeinrichtung ist dabei geeigneter Weise für eine Widerstandsmessung und/oder Strommessung und/oder Spannungsmessung an der PE Schutzleitung und der zweiten Steuerleitung und dem Widerstand und damit zur Überwachung eines Betriebszustands des Ladekabels geeignet eingerichtet.

Ein vorstehend beschriebenes Ladekabel kann geeigneter Weise außerdem eine sich von der Steuerung zu einem in dem Ladestecker als CP (Control Pilot) Kontakt vorgesehenen ersten Steuerkontakt in dem Ladekabel erstreckende erste Steuerleitung aufweisen. Der als CP Kontakt vorgesehene erste Steuerkontakt und die erste Steuerleitung sind dabei vorteilhaft zum Dialog zwischen der Steuerung der Ladestation und dem Fahrzeug mittels Analogsignal vorgesehen.

Ein vorstehend beschriebenes Ladekabel kann geeigneter Weise außerdem wenigstens eine sich in dem Ladekabel erstreckende Phasenleitung zur Verbindung der Steuerung mit wenigstens einem in dem Ladestecker vorgesehenen Phasenkontakt und/oder wenigstens eine sich in dem Ladekabel erstreckende Nullleitung zur Verbindung der Steuerung mit wenigstens einem in dem Ladestecker vorgesehenen Nullleiterkontakt und/oder wenigstens eine sich in dem Ladekabel erstreckende erste und zweite Gleichstromleitung zur Verbindung der Steuerung mit wenigstens einem in dem Ladestecker vorgesehenen ersten und zweiten jeweils als Pluspol und Minuspol eingerichteten Gleichstromkontakt aufweisen.

Ein derartiges vorstehendes Ladekabel kann auf diese Weise zur Verbindung einer Steuerung einer Ladestation mit einem für die Ladestation geeigneten Ladestecker ausgebildet sein, wobei die Ladestation eine Ladesäule oder eine Wallbox sein kann.

Die Erfindung betrifft demnach außerdem ein Ladesystem zum Laden eines Elektrofahrzeugs mit einer Ladestation und einem Ladestecker und einem zur Verbindung des Ladesteckers mit der Ladestation geeigneten vorstehend beschriebenem Ladekabel.

Der Ladestecker weist geeigneter Weise einen PE Schutzkontakt und einen zweiten Steuerkontakt und einen Widerstand auf, der den PE Schutzkontakt und den als PP Kontakt vorgesehenen zweiten Steuerkontakt in dem Ladestecker überbrückt, wobei der Widerstand in dem Ladestecker wie vorstehend beschrieben insbesondere zur Überwachung des maximalen Ladestroms durch die Steuerung der Ladestation vorgesehen ist.

In dem Ladekabel erstreckt sich von dem Widerstand und dem PE Schutzkontakt eine PE Schutzleitung zu einer in einer Steuerung der Ladestation vorgesehenen und geeignet eingerichteten Messeinrichtung. In dem Ladekabel erstreckt sich von dem Widerstand und dem zweiten Steuerkontakt zu der Messeinrichtung der Steuerung außerdem eine zweite Steuerleitung, die zur Überwachung eines Betriebszustands des Ladekabels vorgesehen ist.

Die Messeinrichtung der Steuerung kann dabei für eine Widerstandsmessung und/oder Strommessung und/oder Spannungsmessung an der PE Schutzleitung und der zweiten Steuerleitung und dem Widerstand geeignet eingerichtet sein. Die Steuerung ist dabei geeigneter Weise eingerichtet, die Widerstandsmessung und/oder Strommessung und/oder Spannungsmessung mit einem vorbestimmten Widerstand und/oder einem vorbestimmten Strom und/oder einer vorbestimmten Spannung auf eine vorbestimmte Abweichung zu überprüfen.

Auf diese Weise ist die Steuerung wie vorstehend beschrieben geeignet eingerichtet, einen Betriebszustand des Ladekabels und insbesondere der PE Schutzleitung und der zweiten Steuerleitung zu überwachen, und dabei insbesondere ein Durchtrennen der PE Schutzleitung und/oder der zweiten Steuerleitung zu erkennen, und insbesondere einen Diebstahl des Ladekabels zu detektieren. Die Steuerung ist dabei außerdem geeignet eingerichtet, bei einem Durchtrennen der PE Schutzleitung und/oder der zweiten Steuerleitung und insbesondere bei einem detektierten Diebstahl des Ladekabels wenigstens ein Signal auszugeben.

Das Signal kann eine geeignete Warnmaßnahme auslösen, wie beispielsweise ein optisches und/oder akustisches Warnsignal, das an der Ladestation und/oder einer Remote-Betriebsstation der Ladestation ausgegeben werden kann, und/oder das eine Kamera aktivieren und eine Aufzeichnung des Betriebszustands insbesondere des Ladekabels an der Ladestation auslösen kann, etc..

Ein vorstehend beschriebenes Ladesystem kann außerdem eine sich in dem Ladekabel erstreckende erste Steuerleitung zur Verbindung der Steuerung mit einem in dem Ladestecker als CP (Control Pilot) Kontakt vorgesehenen ersten Steuerkontakt aufweisen.

Das Ladesystem kann weiterhin wenigstens eine sich in dem Ladekabel erstreckende Phasenleitung zur Verbindung der Steuerung mit wenigstens einem in dem Ladestecker vorgesehenen Phasenkontakt und/oder wenigstens eine sich in dem Ladekabel erstreckende . Nullleitung zur Verbindung der Steuerung mit wenigstens einem in dem Ladestecker vorgesehenen Nullleiterkontakt und/oder wenigstens eine sich in dem Ladekabel erstreckende erste und zweite Gleichstromleitung zur Verbindung der Steuerung mit wenigstens einem in dem Ladestecker ersten und zweiten als Pluspol und Minuspol vorgesehenen Gleichstromkontakt aufweisen.

Ein vorstehendes Ladesystem kann auf diese Weise jeweils eine Ladestation aufweisen, die für einen Ladebetrieb mit Wechselstrom einer Nennspannung von 230V bis 400V bei einem maximalen Ladestrom von 13A bis 32A und einer Leistung von 3kW bis 22kW ausgelegt ist, oder die für einen Ladebetrieb mit Gleichstrom eines Spannungsbereichs von 200V bis 600V bei einem maximalen Ladestrom von 80A bis 400A und einer Leistung von 36kW bis 240kW ausgelegt ist, wobei der Widerstand geeigneter Weise jeweils eine Leistung von 0,5W bis 1,0W aufweist. Eine derartige für das Ladesystem geeignete Ladestation kann demnach eine Ladesäule oder eine Wallbox sein.

Ein vorstehend beschriebenes Ladekabel weist vorteilhaft lediglich eine zusätzliche als Sicherheitsleitung eingerichtete zweite Steuerleitung auf, wonach das Ladekabel entsprechend kostengünstig ist. Darüber hinaus wird die bereits in dem Ladekabel vorgesehene PE Schutzleitung vorteilhaft als zusätzliche Sicherheitsleitung zur Überwachung des Ladekabels verwendet. Die PE Schutzleitung weist dabei eine vorteilhafte Doppelfunktion auf.

Die Schutzleitung und die zweite Steuerleitung können in dem vorstehend beschriebenen Ladekabel geeigneter Weise beabstandet und jeweils benachbart zu einem Mantel des Ladekabels einander gegenüberliegend angeordnet sein. Auf diese Weise ist vorteilhaft eine schnelle Detektierung einer Durchtrennung des Ladekabels von zumindest zwei gegenüberliegenden Seiten des Ladekabels ermöglicht.

Das Ladesystem mit der Ladestation, dem Ladekabel mit seiner zweiten Steuerleitung und dem Ladestecker mit seinem den PE Schutzkontakt und den zweiten Steuerkontakt überbrückenden und ebenfalls eine vorteilhafte Doppelfunktion aufweisenden Widerstand nutzt auf vorteilhafte Weise vorhandene Infrastruktur des Ladekabels und des Ladesteckers und kann demnach auf besonders einfache Weise und kostengünstig bereitgestellt werden.

### Ausführungsbeispiel

Ausführungsbeispiele der Erfindung sind in den Zeichnungen dargestellt und werden im Folgenden näher erläutert. Es zeigen:
- Fig. 1: eine schematische Darstellung eines Ladesystems nach einer Ausführung der Erfindung;
- Fig. 2: eine weitere schematische Darstellung eines Ladesystems nach einer Ausführung der Erfindung; und
- Fig. 3: einen Querschnitt eines Ladekabels nach einer Ausführung der Erfindung.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente können unterschiedlich skaliert sein. Nicht alle Bezugszeichen sind in allen Zeichnungen dargestellt.

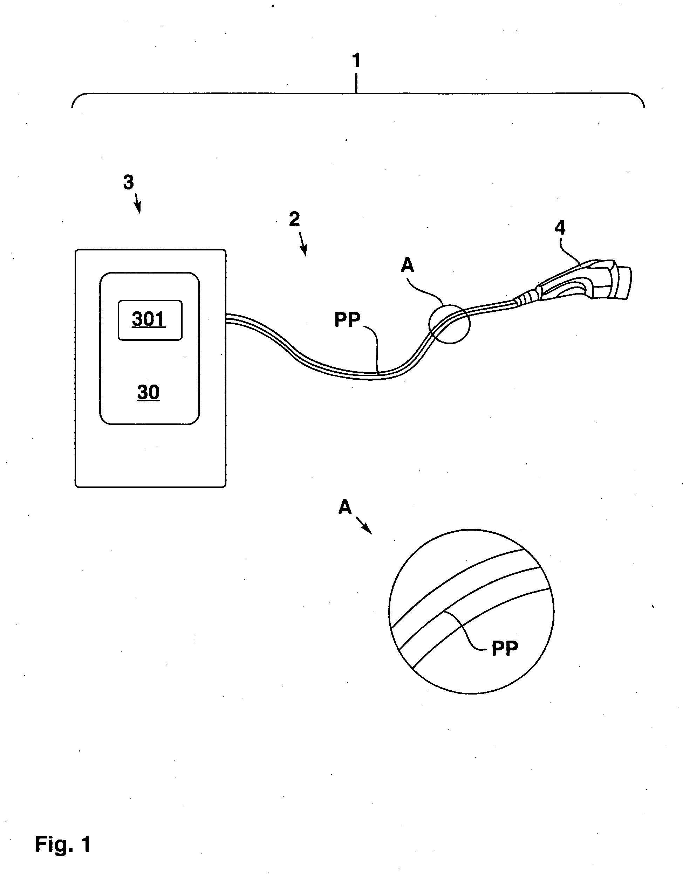

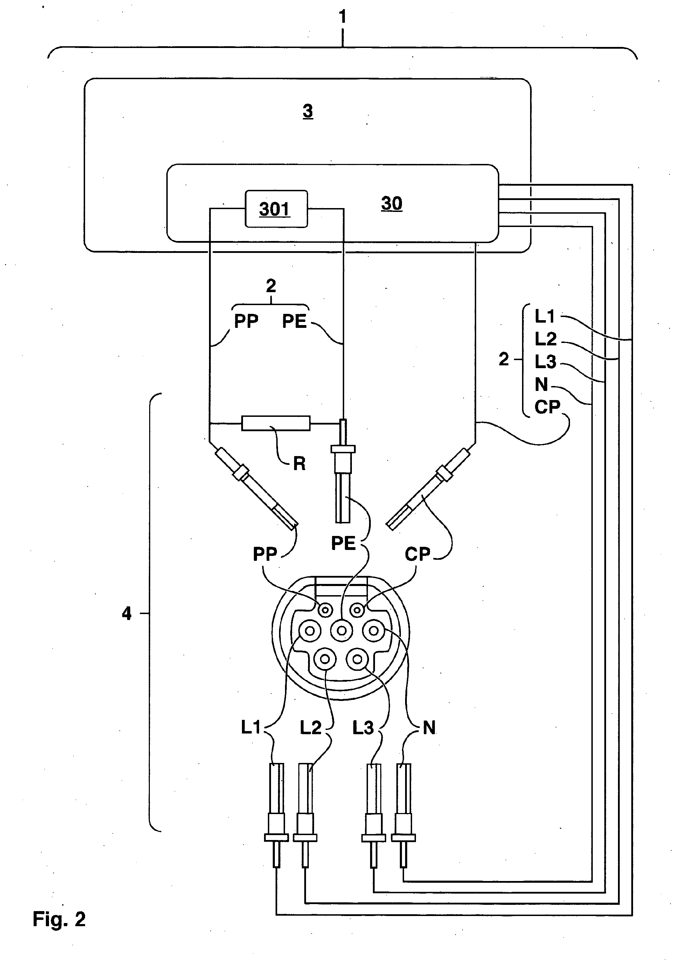

Fig. 1 und 2 zeigen jeweils eine schematische Darstellung eines Ladesystems 1 nach einer Ausführung der Erfindung. Ein Ladekabel 2 zum Laden eines Elektrofahrzeugs ist an einer Ladestation 3 angeschlossen und verbindet eine Steuerung 30 der Ladestation 3 mit einem Ladestecker 4, der für eine Steckverbindung mit einer Ladebuchse des Elektrofahrzeugs vorgesehen ist.

In dem Ladekabel 2 erstreckt sich eine auch in dem vergrößerten Ausschnitt A von Fig. 1 dargestellte zweite Steuerleitung PP von einem in dem Ladestecker 4 als Proximity Pilot Kontakt PP vorgesehenen zweiten Steuerkontakt PP zu einer Messeinrichtung 301 der Steuerung 30. In dem Ladestecker 4 ist außerdem ein Schutzkontakt PE für eine Schutzleitung PE und ein Überwachungswiderstand 4 vorgesehen, der den zweiten Steuerkontakt PP und den Schutzkontakt PE überbrückt.

Die zweite Steuerleitung PP ist als Sicherheitsleitung PP zur Überwachung eines Betriebszustands des Ladekabels 2 vorgesehen und erstreckt sich hierfür von dem zweiten Steuerkontakt PP in dem Ladekabel 2 zu der Messeinrichtung 301 der Steuerung 30 der Ladestation 3.

Das Ladesystem 1 kann ein Ladekabel 2 mit wenigstens einer sich in dem Ladekabel 2 erstreckenden Phasenleitung L1, L2, L3 zur Verbindung der Steuerung 30 mit wenigstens einem in dem Ladestecker 4 vorgesehenen Phasenkontakt L1, L2, L3 aufweisen und dabei wenigstens eine sich in dem Ladekabel 2 erstreckende Nullleitung N zur Verbindung der Steuerung 30 mit wenigstens einem in dem Ladestecker 4 vorgesehenen Nullleiterkontakt N aufweisen. Das Ladesystem 1 kann außerdem wenigsten eine sich in dem Ladekabel 2 erstreckende, in den Zeichnungen nicht dargestellte, erste und zweite Gleichstromleitung DC+ und DC- zur Verbindung der Steuerung 30 mit wenigstens einem in dem Ladestecker 4 vorgesehenen ersten und zweiten als Pluspol und Minuspol vorgesehenen Gleichstromkontakt DC+ und DC- aufweisen.

Das Ladesystem 1 kann eine Ladestation 3 aufweisen, die für einen Ladebetrieb mit Wechselstrom einer Nennspannung von 230V bis 400V bei einem maximalen Ladestrom von 13A bis 32A und einer Leistung von 3kW bis 22kW ausgelegt ist, oder die für einen Ladebetrieb mit Gleichstrom eines Spannungsbereichs von 200V bis 600V bei einem maximalen Ladestrom von 80A bis 400A und einer Leistung von 36kW bis 240kW ausgelegt ist. Eine derartige Ladestation 3 kann insbesondere als Ladesäule oder Wallbox ausgebildet sein.

Ein Ladesystem 1 mit der Ladestation 3, dem Ladekabel 2 und dem Ladestecker 4 und insbesondere mit der Sicherheitsleitung PP und der Messeinrichtung 301 sowie mit einer ersten L1, zweiten L2 und dritten L3 Phasenleitung ist schematisch in Fig. 2 dargestellt.

Die Steuerung 30 mit der Messeinrichtung 301 ist geeignet eingerichtet, einen Betriebszustand des Ladekabels 2 und insbesondere der Schutzleitung PE und der zweiten Steuerleitung PP zu überwachen, und dabei insbesondere ein Durchtrennen der Schutzleitung PE und/oder der zweiten Steuerleitung PP zu erkennen, und insbesondere einen Diebstahl des Ladekabels 2 zu detektieren.

Der Ladestecker 4 insbesondere des Ladesystems 1 gemäß Fig. 2 weist einen Schutzkontakt PE und einen ersten als Control Pilot Kontakt vorgesehenen Steuerkontakt CP und einen zweiten Steuerkontakt PP und einen Widerstand R auf. Der Widerstand R überbrückt den Schutzkontakt PE und den zweiten Steuerkontakt PP in dem Ladestecker 4, wobei der Widerstand R insbesondere zur Überwachung des maximalen Ladestroms durch die Steuerung 30 der Ladestation 3 vorgesehen ist. In dem Ladekabel 2 erstreckt sich hierfür von dem Widerstand R und dem Schutzkontakt PE eine Schutzleitung PE zu der Steuerung 30 der Ladestation 3.

Die Schutzleitung PE erstreckt sich außerdem zu einer Messeinrichtung 301 der Steuerung 30. In dem Ladekabel 2 erstreckt sich außerdem eine zweite Steuerleitung PP von dem Widerstand R und dem zweiten Steuerkontakt PP zu der Messeinrichtung 301 der Steuerung 30. Darüber hinaus weist das Ladekabel 2 beispielhaft eine Nullleitung N und eine erste L1, zweite L2 und dritte L3 Phasenleitung auf, und ist demnach zur Verbindung einer dreiphasigen Wechselstrom-Ladestation 3 mit einem geeigneten Ladestecker 4 mit entsprechenden Kontakten L1, L2 und L3 geeignet.

Geeigneter Weise ist die Messeinrichtung 301 für eine Widerstandsmessung und/oder Strommessung und/oder Spannungsmessung an der Schutzleitung PE und der zweiten Steuerleitung PP und dem Widerstand R geeignet eingerichtet. Die Steuerung 30 ist hierdurch eingerichtet, einen Betriebszustand des Ladekabels 2 und insbesondere der Schutzleitung PE und der zweiten Steuerleitung PP zu überwachen. Wie eingangs beschrieben kann bei der Überwachung geeigneter Weise von der Steuerung 30 ein gemessener Strom und/oder eine gemessene Spannung und/oder ein gemessener Widerstand mit einem vorbestimmten Strom und/oder einer vorbestimmten Spannung und/oder einem vorbestimmten Widerstand verglichen werden und jeweils auf eine vorbestimmte Abweichung überprüft werden.

Auf diese Weise ist vorteilhaft sichergestellt, dass mittels der Steuerung 30 insbesondere ein Durchtrennen der Schutzleitung PE und/oder der zweiten Steuerleitung PP erkennbar ist, und dabei insbesondere ein Diebstahl des Ladekabels 2 detektiert werden kann, wobei der Widerstand R eine vorteilhafte Doppelfunktion aufweist und dabei zugleich zur Überwachung des maximalen Ladestroms sowie des Betriebszustands des Ladekabels 2 dient.

Die Steuerung 30 ist geeigneter Weise außerdem eingerichtet, bei einer Detektierung zumindest einer vorstehend beschriebenen vorbestimmten Abweichung, die insbesondere von einer Durchtrennung der Schutzleitung PE und/oder der zweiten Steuerleitung PP und insbesondere von einem Diebstahl des Ladekabels 2 und insbesondere auch bereits von einem Diebstahlversuch des Ladekabels 2 verursacht sein kann, wenigstens ein Signal auszugeben. Das Signal kann eine geeignete Warnmaßnahme auslösen, wie beispielsweise ein optisches und/oder akustisches Warnsignal, das auch an der Ladestation 3 und/oder einer Remote-Betriebsstation der Ladestation 3 ausgegeben werden kann, und/oder das eine Kamera aktivieren und eine Aufzeichnung des Betriebszustands insbesondere des Ladekabels 2 an der Ladestation 3 auslösen kann, etc..

Ein vorstehend beschriebenes Ladekabel 2 weist vorteilhaft lediglich eine zusätzliche als Sicherheitsleitung PP eingerichtete zweite Steuerleitung PP auf, wobei darüber hinaus die bereits in dem Ladekabel 2 vorgesehene Schutzleitung PE als vorteilhaft zusätzliche Sicherheitsleitung zur Überwachung des Ladekabels 2 dient und demnach eine vorteilhafte Doppelfunktion aufweist, wonach das Ladekabel 2 entsprechend kostengünstig ist.

Das Ladesystem 1 mit der Ladestation 3, dem Ladekabel 2 mit seiner zweiten Steuerleitung PP und dem Ladestecker 4 mit seinem den PE Schutzkontakt und den PP Kontakt überbrückenden und ebenfalls eine vorteilhafte Doppelfunktion aufweisenden Widerstand R nutzt somit auf geeignete Weise vorhandene Infrastruktur des Ladekabels 2 und des Ladesteckers 4 und kann demnach auf besonders einfache Weise und kostengünstig bereitgestellt werden.

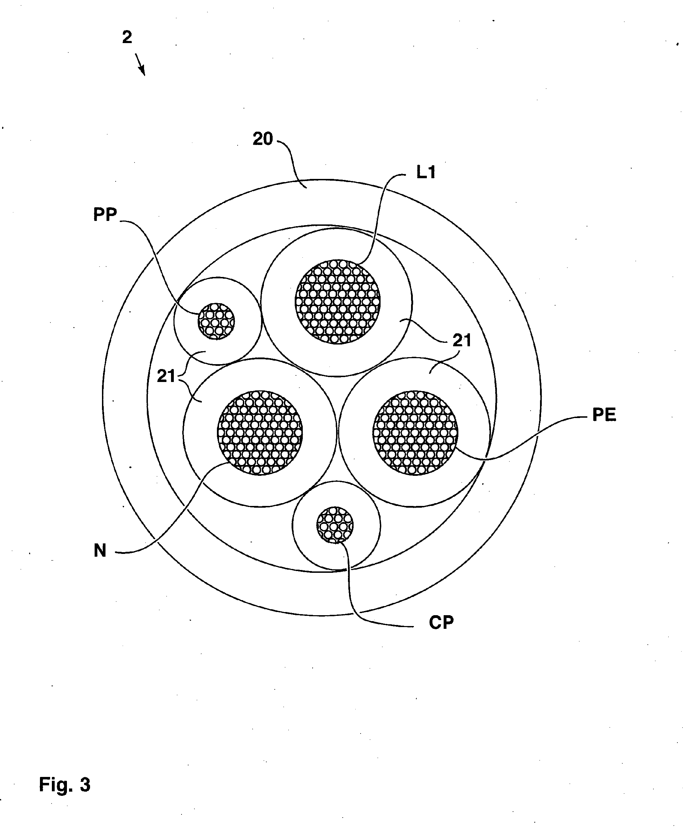

Fig. 3 zeigt eine vergrößerte schematische Darstellung eines Querschnitts eines Ladekabels 2 nach einer Ausführung der Erfindung. Das Ladekabel 2 weist eine Schutzleitung PE, eine Nullleitung N, eine erste Steuerleitung CP, und eine vorstehend unter Bezugnahme auf Fig. 1 und 2 erwähnte zweite Steuerleitung PP und beispielhaft lediglich eine Phasenleitung L1 auf, die im Kabelinneren benachbart zueinander angeordnet sind und von einem Mantel 20 des Ladekabels 2 umgeben sind. Das Ladekabel 2 ist mit seiner Phasenleitung L1 für eine Wechselstromladung eines Elektrofahrzeugs geeignet.

Nachdem das Ladesystem 1 wie vorstehend unter Bezugnahme auf Fig. 1 und Fig. 2 beschrieben geeignet eingerichtet ist, einen Diebstahl des Ladekabels 2 und insbesondere ein Durchtrennen der Schutzleitung PE und/oder der zweiten Steuerleitung PP zu detektieren, sind die Schutzleitung PE und die zweite Steuerleitung PP in dem Ladekabel 2 geeigneter Weise beabstandet und jeweils benachbart zu einem Mantel 20 des Ladekabels 2 einander gegenüberliegend angeordnet.

Auf diese Weise ist vorteilhaft eine schnelle Detektierung einer Durchtrennung des Ladekabels 2 von zumindest zwei gegenüberliegenden Seiten des Ladekabels 2 ermöglicht. Im übrigen ist klar, dass das Innere des Ladekabels 2 außerdem mit einem geeigneten in der Zeichnung nicht dargestellten Füllmaterial befüllt ist, so dass die vorstehende vorteilhafte Positionierung der Schutzleitung PE und der Sicherheitsleitung PP im Inneren des Ladekabels 2 stabilisiert ist.

Während alle Leitungen geeigneter Weise als beispielhaft feinadrige Kupferlitzen ausgebildet sind, die jeweils von einer Isolierung 21 umgeben sind, sind die Schutzleitung PE, die Nullleitung N und die Phasenleitung L1 vergleichsweise dick gegenüber der dünner ausgebildeten ersten CP und zweiten PP Steuerleitung.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: I Ladesystem

- 2: Ladekabel
- 20: Mantel, Kabelmantel
- 21: Isolierung

- 3: Ladestation, Ladetechnik, Ladesäule, Wallbox
- 30: Steuerung
- 301: Messeinrichtung, Signaleinrichtung

- 4: Ladestecker

- A: Ausschnitt
- PE: Schutzkontakt, Erdkontakt, Schutzleitung, Erdleitung
- PP: Signalkontakt, Steuerkontakt, Proximity Pilot Kontakt, Signalleitung, Steuerleitung, Sicherheitsleitung
- CP: Signalkontakt, Steuerkontakt, Steuerkontakt, Control Pilot Kontakt, Signalleitung, Steuerleitung
- DC+, DC-: Gleichstromkontakt, Pluspol, Minuspol, Gleichstromleitung
- N: Nullleiter Kontakt, Neutralleiter Kontakt, Nullleitung, Neutralleitung
- L1, L2, L3: Phasenkontakt, Phasenleitung
- R: Widerstand, Überwachungswiderstand

## Patentansprüche

1. Ladekabel (2) zum Laden eines Elektrofahrzeugs, das an einer Ladestation (3) angeschlossen ist und eine Steuerung (30) der Ladestation (3) mit einem Ladestecker (4) verbindet, mit einer sich in dem Ladekabel (2) von der Steuerung (30) zu einem in dem Ladestecker (4) vorgesehenen Schutzkontakt (PE) erstreckenden Schutzleitung (PE), und
einer sich in dem Ladekabel (2) von der Steuerung (30) zu einem in dem Ladestecker (4) vorgesehenen zweiten Steuerkontakt (PP) erstreckenden zweiten Steuerleitung (PP), wobei die zweite Steuerleitung (PP) als Sicherheitsleitung (PP) zur Überwachung eines Betriebszustands des Ladekabels (2) vorgesehen ist und sich hierfür von dem zweiten Steuerkontakt (PP) in dem Ladekabel (2) zu einer Messeinrichtung (301) der Steuerung (30) der Ladestation (3) erstreckt.

2. Ladekabel (2) nach Anspruch 1, wobei
die zweite Steuerleitung (PP) außerdem an einen in dem Ladestecker (4) vorgesehenen Widerstand (R) angeschlossen ist, der den Schutzkontakt (PE) und den zweiten Steuerkontakt (PP) in dem Ladestecker (4) überbrückt.

3. Ladekabel (2) nach Anspruch 2, wobei
die Schutzleitung (PE) sich von dem Widerstand (R) und dem Schutzkontakt (PE) in dem Ladekabel (2) zu der Steuerung (30) der Ladestation (3) erstreckt, und wie die Sicherheitsleitung (PP) ebenfalls an die Messeinrichtung (301) der Steuerung (30) angeschlossen ist.

4. Ladekabel (2) nach einem der Ansprüche 1 bis 3, wobei die Schutzleitung (PE) und die zweite Steuerleitung (PP) in dem Ladekabel (2) beabstandet und jeweils benachbart zu einem Mantel (20) des Ladekabels (2) einander gegenüberliegend angeordnet sind.

5. Ladekabel (2) nach einem der Ansprüche 1 bis 4, außerdem mit einer sich in dem Ladekabel (2) von der Steuerung (30) zu einem in dem Ladestecker (4) vorgesehenen ersten Steuerkontakt (CP) erstreckenden ersten Steuerleitung (CP), und
wenigstens einer sich in dem Ladekabel (2) erstreckenden Phasenleitung (L1, L2, L3) zur Verbindung der Steuerung (30) mit wenigstens einem in dem Ladestecker (4) vorgesehenen Phasenkontakt (L1, L2, L3) und/oder
wenigstens einer sich in dem Ladekabel (2) erstreckenden Nullleitung (N) zur Verbindung der Steuerung (30) mit wenigstens einem in dem Ladestecker (4) vorgesehenen Nullleiterkontakt (N) und/oder
wenigstens einer sich in dem Ladekabel (2) erstreckenden ersten und zweiten Gleichstromleitung (DC+; DC-) zur Verbindung der Steuerung (30) mit wenigstens einem in dem Ladestecker (4) als Pluspol und Minuspol vorgesehenen ersten und zweiten Gleichstromkontakt (DC+; DC-).

6. Ladesystem (1) zum Laden eines Elektrofahrzeugs mit einer Ladestation (3) und einem Ladestecker (4) und einem zur Verbindung des Ladesteckers (4) mit der Ladestation (3) vorgesehenen Ladekabel (2) nach einem der Ansprüche 1 bis 5, wobei
der Ladestecker (4) einen Schutzkontakt (PE) und einen zweiten Steuerkontakt (PP) und einen Widerstand (R) aufweist, der den Schutzkontakt (PE) und den zweiten Steuerkontakt (PP) in dem Ladestecker (4) überbrückt, wobei der Widerstand (R) zur Überwachung des maximalen Ladestroms durch die Steuerung (30) vorgesehen ist, und wobei
sich in dem Ladekabel (2) von dem Schutzkontakt (PE) und dem Widerstand (R) eine Schutzleitung (PE) zu einer Messeinrichtung (301) einer Steuerung (30) der Ladestation (3) erstreckt, und sich in dem Ladekabel (2) außerdem eine zweite Steuerleitung (PP) von dem Widerstand (R) und dem zweiten Steuerkontakt (PP) zu der Messeinrichtung (301) der Steuerung (30) erstreckt.

7. Ladesystem (1) nach Anspruch 6, wobei die Messeinrichtung (301) für eine Widerstandsmessung und/oder Strommessung und/oder Spannungsmessung an der Schutzleitung (PE) und der zweiten Steuerleitung (PP) und dem Widerstand (R) geeignet eingerichtet ist, und wobei die Steuerung (30) eingerichtet ist, die Widerstandsmessung und/oder Strommessung und/oder Spannungsmessung mit einem vorbestimmten Widerstand und/oder einem vorbestimmten Strom und/oder einer vorbestimmten Spannung auf eine vorbestimmte Abweichung zu überprüfen.

8. Ladesystem (1) nach Anspruch 6 oder 7, wobei die Steuerung (30) eingerichtet ist, einen Betriebszustand des Ladekabels (2) und insbesondere der Schutzleitung (PE) und der zweiten Steuerleitung (PP) zu überwachen, und insbesondere ein Durchtrennen der Schutzleitung (PE) und/oder der zweiten Steuerleitung (PP) zu erkennen, und insbesondere einen Diebstahl des Ladekabels (2) zu detektieren.

9. Ladesystem (1) nach Anspruch 8, wobei die Steuerung (30) eingerichtet ist, bei einem Durchtrennen der Schutzleitung (PE) und/oder der zweiten Steuerleitung (PP) und insbesondere bei einem detektierten Diebstahl des Ladekabels (2) wenigstens ein Signal auszugeben.

10. Ladesystem (1) nach einem der Ansprüche 6 bis 9, mit einer sich in dem Ladekabel (2) erstreckenden ersten Steuerleitung (CP) zur Verbindung der Steuerung (30) mit einem in dem Ladestecker (4) vorgesehenen ersten Steuerkontakt (CP), und wenigstens einer sich in dem Ladekabel (2) erstreckenden Phasenleitung (L1, L2, L3) zur Verbindung der Steuerung (30) mit wenigstens einem in dem Ladestecker (4) vorgesehenen Phasenkontakt (L1, L2, L3) und/oder
wenigstens einer sich in dem Ladekabel (2) erstreckenden Nullleitung (N) zur Verbindung der Steuerung (30) mit wenigstens einem in dem Ladestecker (4) vorgesehenen Nullleiterkontakt (N) und/oder
wenigstens einer sich in dem Ladekabel (2) erstreckenden ersten und zweiten Gleichstromleitung (DC+; DC-) zur Verbindung der Steuerung (30) mit wenigstens einem in dem Ladestecker (4) als Pluspol und Minuspol vorgesehenen ersten und zweiten Gleichstromkontakt (DC+; DC-).

11. Ladesystem (1) nach einem der Ansprüche 6 bis 10, mit einer Ladestation (3), die für einen Ladebetrieb mit Wechselstrom einer Nennspannung von 230V bis 400V bei einem maximalen Ladestrom von 13A bis 32A und einer Leistung von 3kW bis 22kW ausgelegt ist, oder
die für einen Ladebetrieb mit Gleichstrom eines Spannungsbereichs von 200V bis 600V bei einem maximalen Ladestrom von 80A bis 400A und einer Leistung von 36kW bis 240kW ausgelegt ist; wobei
der Widerstand (R) eine Leistung von 0,5W bis 1,0W aufweist; und wobei die Ladestation (3) eine Ladesäule oder eine Wallbox ist.
